# EUROPÄISCHE PATENTSCHRIFT

(11) **EP 3 027 971 B1**
(45) Veröffentlichungstag und Bekanntmachung des Hinweises auf die Patenterteilung: **16.03.2022**
(21) Anmeldenummer: 14777140.6
(22) Anmeldetag: 29.07.2014
(51) Int. Cl.: F24D 11/00, F24D 11/02, F24F 5/00

(54) **TEMPERATUR-MANAGEMENT-SYSTEM**
TEMPERATURE-MANAGEMENT-SYSTEM
SYSTÈME DE GESTION DE TEMPÉRATURE

(30) Priorität: 29.07.2013 DE 102013012436
(43) Veröffentlichungstag der Anmeldung: 08.06.2016
(73) Patentinhaber: Franck, Jan, 95466 Weidenberg (DE)
(72) Erfinder: Franck, Jan, 95466 Weidenberg (DE)
(74) Vertreter: Küchler, Stefan
(86) Internationale Anmeldenummer: PCT/IB2014/001404
(87) Internationale Veröffentlichungsnummer: WO 2015/015273

(56) Entgegenhaltungen:
- US-A- 3 339 629
- US-A- 3 965 972
- US-A- 4 007 776
- US-A- 4 165 036
- US-A- 4 182 406
- US-A- 4 809 523

## Beschreibung

Die Erfindung richtet sich auf ein Temperatur-Management-System für einen privaten Haushalt oder ein öffentliches Gebäude, umfassend einen vorzugsweise als Warmwasserbehälter ausgebildeten Wärmespeicher mit einer Heizwendel und einen vorzugsweise als Kaltwasserbehälter ausgebildeten Kältespeicher mit einer Kühlwendel, welche zum Zweck des Aufheizens oder Abkühlens des jeweiligen Speichers über eine Vorlaufleitung und über eine Rücklaufleitung mit wenigstens einem im Freien angeordneten Solarkollektor oder Wärmetauscher gekoppelt sind, so dass sich ein Kreislauf für ein Wärmeübertragungsmedium ergibt, wobei in dem Kreislauf Ventile angeordnet sind, nach deren Stellung sich der Kreislauf des wenigstens einen Solarkollektors oder Wärmetauschers für das Wärmeübertragungsmedium wahlweise unterschiedlich schließt, nämlich bei Auswahl des Tagbetriebs schließt sich der Kreislauf von dem wenigstens einen Solarkollektor oder Wärmetauscher über die Vorlaufleitung und über die Rücklaufleitung zu der Heizwendel im Wärmespeicher, so dass ein Wärmetransport von dem wenigstens einen Solarkollektor oder Wärmetauscher zu dem Wärmespeicher hin stattfindet, und bei Auswahl des Nachtbetriebs schließt sich der Kreislauf von dem wenigstens einen Solarkollektor oder Wärmetauscher über die Vorlaufleitung und über die Rücklaufleitung zu der Kühlwendel im Kältespeicher, so dass ein Wärmetransport von dem Kältespeicher zu dem wenigstens einen Solarkollektor oder Wärmetauscher hin stattfindet.

Im Stand der Technik sind mittlerweile auch Heisswasser-Solaranlagen üblich, wobei über einen oder mehrere Solarkollektoren aufgeheiztes Wasser über eine Wärmetauscher-Spirale zur Auf- oder Nachheizung eines Wasservorrats in einem Warmwasserbehälter verwendet wird. Der Warmwasserbehälter kann beispielsweise mit einer Zentralheizungsanlage gekoppelt sein, um die gespeicherte Wärme bei Bedarf über dezentrale Heizkörper in der betreffenden Wohnung zu verteilen.

Die US-Patentschrift 4,809,523 offenbart ein Kreislaufystem für wenigstens ein Fluid zur Übertragung von Wärmeenergie von einer Wärmequelle wie bspw. einem Sonnenkollektor auf einen oder mehrere Wärmeaustauscher, welche die Wärme entfernt von dem Sonnenkollektor abgeben. Der Druck am oberen Punkt des Systems wird auf einem solchen Niveau gehalten, dass das Fluid im gewünschten Betriebstemperaturbereich des Kollektors verdampft. Der Dampf sammelt sich in einem Akkumulator, der im Wärmeübertragungssystem mit dem Kollektor parallel geschaltet ist. Der Akkumulator dient dazu, einen geregelten Dampfstrom aufrechtzuerhalten. Die Pumpe hat mehrere Aufgaben: Einerseits hält sie die Zirkuliation des Wärmeübertragungsfluids aufrecht, und andererseits dient sie als eine Art Dampf-Kompressor für das Pumpen von Wärme von der Außenumgebung in das System, um die von dem Sonnenkollektor zugeführte Wärmemenge zu steigern. Bei diesem vorbekannten System gibt es einen Wärmespeicher sowie einen davon vollkommen getrennten Kältespeicher. Von diesen ist jedoch nur der Wärmespeicher mit einem auf dem Dach angeordneten Solarkollektor gekoppelt, der Kältespeicher ist andererseits nur mit einem auf dem Dachboden aufgestellten Verdampfer gekoppelt. Mit anderen Worten, die bei der Kühlung des Kältespeichers abfallende Wärme wird unterhalb des Daches auf dem Dachboden abgegeben, was dort zu einem extremen Hitzestau führen kann und daher den Dachboden jedenfalls in der Sommerzeit unbenutzbar macht.

Ferner sind beispielsweise bei Volger, Karl: "Haustechnik", Seite 743 Beispiele für sogenannte Solar- oder Sonnenheizungen verschiedene Varianten dargestellt, in Bild 743,1 eine primär zur Warmwasserbereitung verwendbare Anlage, in Bild 743.3 ein Solarabsorberdach mit Wärmepumpe zur Raumheizung.

Ein Nachteil derartiger Anordnungen ist, dass solche Solar-Heizungsanlagen vergleichsweise aufwändig sind und nur zu Heizungszwecken verwendet werden können, allenfalls noch zur Warmwasserbereitung, während manchmal, nämlich insbesondere an sehr heißen Tagen, vielmehr ein Bedürfnis nach Kühlung besteht, dem eine solche Solar-Heizungsanlage naturgemäß nicht entsprechen kann.

Zwar sind für diesen Zweck Klimaanlagen bekannt, welche zusätzlich zu der jeweiligen Heizung installiert werden. Es gibt kleinere Klimageräte, bei deren Installation zusätzlich zu den vorhandenen Heizleitungen im Haus weitere Rohr- oder Schlauchleitungen für diese Klimageräte verlegt werden müssen, nämlich zwischen einem oder mehreren Innengeräten und wenigstens einem Außengerät, oder größere Klimaanlagen, welche eine Luftumwälzung in den betreffenden Räumen erfordern, wobei die Abluft aus den betreffenden Räumen entweder gefiltert und umgewälzt oder durch frische Zuluft ersetzt wird, die - ggf. unter Verwendung der aus der Abluft gewonnenen Abwärme - vorgeheizt werden muss. Derartige Klimaanlagen sind äußerst aufwändig und - da sie meist nur für wenige Wochen im Jahr in Betrieb sind, völlig unrentabel.

Aus den Nachteilen des beschriebenen Standes der Technik resultiert das die Erfindung initiierende Problem, ein Temperatur-Management-System zu schaffen, welches in der Lage ist, im Rahmen eines privaten Haushalts oder eines öffentlichen Gebäudes nicht nur zu heizen, sondern bei Bedarf auch für Abkühlung zu sorgen, ohne dass hierzu eine aufwändige Klimaanlage angeschafft und installiert werden muss.

Die Lösung dieses Problems gelingt bei einem gattungsgemäßen Temperatur-Management-System dadurch, dass die Kühlwendel im oberen Bereich des Kältespeichers angeordnet ist, und dass im unteren Bereich des Kältespeichers ein Wärmetauscher angeordnet ist, an welchem ein oder mehrere Heizkörper derart angeschlossen sind, dass zwischen diesen und dem Wärmetauscher in dem unteren Bereich des Kältespeichers ein Wärmeübertragungsmedium zirkulieren kann.

Es gibt also nicht wie bei herkömmlichen Heizungsanlagen nur einen Wärmespeicher oder Warmwasserbehälter, sondern zusätzlich noch einen Kältespeicher oder Kaltwasserbehälter, so dass für jeden Anwendungsfall die gewünschte Temperatur jederzeit zur Verfügung steht, insbesondere auch an heißen Tagen eine Kühlung möglich ist. Indem für die Bevorratung eines Mediums mit zwei verschiedenen Temperaturniveaus zwei voneinander getrennte Behälter verwendet werden, stehen diese unabhängig voneinander für unterschiedliche Anwendungen jederzeit zur Verfügung.

Indem der Wärmespeicher oder Warmwasserbehälter und der Kältespeicher oder Kaltwasserbehälter zum Zweck des Aufheizens oder Abkühlens des jeweiligen Wasserreservoirs wahlweise an einen oder mehrere gemeinsame Solarkollektoren und/oder Wärmetauscher gekoppelt oder koppelbar sind, ist die Möglichkeit der Energieaufnahme oder -abgabe aus der / an die Umgebung gegeben. Wähend herkömmliche Solarkollektoren primär darauf optimiert sind, möglichst viel Sonnenstrahlung aufzufangen und in nutzbare Wärme umzusetzen, erlauben Wärmetauscher auch einen direkten Energieaustausch mit einem umgebenden Medium, insbesondere Luft oder Wasser. Für die Anordnung von Wärmetauschern gibt es mehrere Möglichkeiten: Diese können einerseits mit Solarkollektoren integriert sein oder als davon getrennte Wärmetauscher realisiert sein. Die Integration mit einem Solarkollektor könhte wahlweise unmittelbar erfolgen, also dadurch, dass der Solarkollektor ohne Isolation ausgebildet wird, als auch mittelbar, also durch gemeinsame Anordnung von Rohrschlangen des Solarkollektors und des Wärmetauschers an einem gemeinsamen Rahmen. In letzterem Fall könnte eine Rohrschlange des Wärmetauschers an der Rückseite der Rohrschlange des Solarkollektors angeordnet sein, und jene lassen sich bspw. parallelschalten oder selektiv anschließen, also getrennt voneinander, um den jeweiligen Anfordernissen und Umgebungsbedingungen gerecht zu werden.

Zum Wärmeaustausch weist der Warmwasserbehälter und/oder der Kaltwasserbehälter eine Heiz- oder Kühlwendel auf, durch die das im Kreislauf geführte Wärmeübertragungsmedium zirkuliert.

Indem die Leitungen zwischen dem wenigstens einen im Freien angeordneten Solarkollektor oder Wärmetauscher einerseits und dem Wärmespeicher oder Warmwasserbehälter und/oder dem Kältespeicher oder Kaltwasserbehälter andererseits thermisch zu einem Kreis geschlossen sind, worin ein Wärmeübertragungsmedium, vorzugsweise ein flüssiges Wärmeübertragungsmedium, insbesondere Wasser, zirkuliert, ist ein ununterbrochener Energietransport möglich.

Obzwar die speisenden Kreisläufe der beiden Behälter voneinander getrennt sein könnten, so dass dort völlig unterschiedliche Medien zirkulieren könnten (also beispielsweise Wasser mit einem Frostschutzmittel in dem Kreislauf des Kaltwasserbehälters, Öl in dem Kreislauf des Warmwasserbehälters), wird dies nicht als bevorzugt angesehen. Denn die Möglichkeit einer wahlweisen Ankopplung an die selben Solarkollektoren oder Wärmetauscher wird durch die Verwendung eines einheitlichen Wärmeübertragungsmediums erheblich begünstigt. Die Erfindung empfiehlt hierfür Wasser oder Öl, eventuell mit weiteren Zusätzen, beispielsweise Frostschutzmittel. Auch ist dadurch bei Bedarf eine direkte Kopplung zwischen beiden Behältern möglich, die weiter unten noch näher erläutert wird.

Ist die wahlweise Ankopplung gemäß einer Tag-Betriebsart erfolgt, so findet ein Wärmetransport von einem oder mehreren Solarkollektoren und/oder Wärmetauschern zu dem Wärmespeicher oder Warmwasserbehälter hin statt.

Ist jedoch die Ankopplung gemäß einer Nacht-Betriebsart erfolgt, so findet dagegen ein Wärmetransport von dem Kältespeicher oder Kaltwasserbehälter zu einem oder mehreren Solarkollektoren und/oder Wärmetauschern statt.

Ferner besteht die Möglichkeit, Luft-Wärmetauscher zu verwenden, welche frei aufgestellt sind und nur von Luft umspült werden. Andererseits könnten diese auch zum Austausch von Wärme mit dem Erdreich oder Grundwasser ausgebildet sein; eine besonders effiziente Möglichkeit ist, diese in eine unterirdische Wasserzisterne zu integrieren, wo ein primärer Wärmetausch mit dem Inhalt der Wasserzisterne möglich ist.

Der wenigstens eine im Freien angeordnete Solarkollektor oder Wärmetauscher sollte zu einem möglichst intensiven Wärmeaustausch mit der Umgebung befähigt sein, insbesondere ohne jegliche Isolation ausgebildet sein. Dies ist gerade bei Solarkollektoren nicht selbstverständlich, da jene für einen reibungslosen Betrieb im Winter manchmal thermisch isoliert sind.

Um die abgegebene oder aufgenommeneWärme möglichst vollständig zu den Speicherbehältern zu transportieren, sieht die Erfindung weiterhin vor, dass die Leitungen zwischen dem wenigstens einen im Freien angeordneten Solarkollektor oder Wärmetauscher einerseits und dem Wärmespeicher und/oder dem Kältespeicher andererseits thermisch isoliert sind.

Es liegt im Rahmen der Erfindung, dass in einem Kreislauf für ein Wärmeübertragungsmedium wenigstens eine Pumpe und/oder wenigstens ein Kompressor angeordnet ist. Diese(r) stellt eine definierte Zirkulation des Wärmeübertragungsmediums sicher.

Die Erfindung lässt sich dahingehend weiterbilden, dass in einem Kreislauf für ein Wärmeübertragungsmedium wenigstens ein Entspannungsventil angeordnet ist. Durch ein Entspannungsventil in Ergänzung zu einem Kompressor ist die Struktur einer Wärmepumpe geschaffen, d.h., indem stromaufwärts eines Wärmetauschers ein Kompressor und stromabwärts des Wärmetauschers ein Entspannungsventil angeordnet wird, lässt sich der Druck und damit vor allem auch das Temperaturniveau an dem betreffenden Wärmetauscher anheben, und damit wird eine dortige Wärmeabgabe initiiert.

Sitzt umgekehrt ein Entspannungsventil stromaufwärts eines Wärmetauschers und ein Kompressor stromabwärts desselben, so wird im Bereich des betreffenden Wärmetauschers der Druck und damit auch das Temperaturniveau abgesenkt, um dort eine Wärmeaufnahme zu veranlassen.

Die Leitungen von/zu den Solarkollektoren oder Wärmetauschern sollten als Druckleitungen ausgebildet sein, damit diese - insbesondere im Rahmen der Struktur einer Wärmepumpe - unter Druck gesetzt werden können, um an den Solarkollektoren oder Wärmetauschern eine Wärmeabgabe zu bewirken.

Aus dem selben Grund sollte wenigstens ein im Freien angeordneter Solarkollektor oder Wärmetauscher selbst druckfest ausgebildet sein, beispielsweise für einen Überdruck bis 5 atm oder darüber, vorzugsweise für einen Überdruck bis 10 atm oder darüber, insbesondere für einen Überdruck bis 20 atm oder darüber.

Für einen möglichst geringen Wärmeverlust empfiehlt die Erfindung, dass der Wärmespeicher und/oder der Kältespeicher zu einem möglichst geringen Wärmeaustausch mit der Umgebung ausgebildet ist/sind, insbesondere mit einer intensiven thermischen Isolation ausgestattet ist/sind. Diese thermische Isolation sollte derart gut konzipiert sein, dass ein einmal erreichtes Temperaturniveau über mehrere Stunden hinweg, insbesondere über wenigstens etwa 12 Stunden hinweg, näherungsweise stabil gehalten werden kann, also beispielsweise nur um 1 bis 5 Grad abweicht: ΔT < 5 °C für Δt > 12 Stunden, zumindest sofern dem betreffenden Behälter nicht aktiv Wärme entzogen oder zugeführt wird. Dies lässt sich beispielsweise bewirken durch eine Wärmedämmung mit sogenannten Vakuumisolationspaneelen, wobei um einen porösen Kern eine luftdichte Hülle, bspw. aus einer Aluminium- oder Hochbarrierefolie, geschlagen ist, und diese nach luftdichtem Versiegeln evakuiert ist. Innerhalb der evakuierten Poren findet weder durch Konvektion noch durch Wärmeleitung ein Wärmetransport statt.

Weitere Vorteile ergeben sich dadurch, dass der Kältespeicher unterirdisch angeordnet ist, insbesondere in Form einer Zisterne. Solchenfalls steht der Behälter in unmittelbarem Kontakt mit tieferen Schichten des Erdreichs, welche im Winter keinem Frost ausgesetzt sind und im Sommer sich nicht auf mehr als etwa 10 bis 15 °C erwärmen, also deutlich kühler sind als die sommerliche Hitze der Luft. Dadurch ist einerseits eine thermische Isolation eines solchen Kältespeichers überflüssig; andererseits kann sogar ein intensiver thermischer Kontakt mit dem umgebenden Erdreich einer Erwärmung des Behälterinhalts auf mehr als die oben erwähnten 10 bis 15 °C entgegenwirken, selbst wenn in besonders lauen Sommernächten die nächtliche Abkühlung ausbleibt und daher die erfindungsgemäßen Solarkollektoren oder Luftwärmetauscher keine ausreichende Abkühlung leisten.

Der Wärmespeicher und/oder der Kältespeicher sollte(n) mit einem Druckausgleichsventil versehen sein, damit sich infolge von Temperaturveränderungen kein übermäßiger Druck aufbauen kann. Andererseits wäre es auch möglich, diese(n) nicht vollständig zu befüllen, so dass eine verbleibende Luft- oder Gasblase sich je nach Bedarf ausdehnen kann. Auch Druckausgleichsbehälter wären denkbar.

Andererseits kann es vorteilhaft sein, dass der Wärmespeicher und/oder der Kältespeicher mit einer Nachspeiseeinrichtung und/oder eine Füllstandsregelung ausgerüstet ist/sind. Dadurch lässt sich einerseits sicherstellen, dass die Wärmetauscher in dem betreffenden Behälter stets vollständig untergetaucht sind; andererseits bleibt eine möglicherweise erwünschte Luftblase innerhalb des Behälters erhalten.

Ferner kann vorgesehen sein, dass der Wärmespeicher und/oder der Kältespeicher mit einer Temperaturregelung ausgerüstet ist/sind. Damit wird das Ziel verfolgt, ein vorgegebenes oder vorgebbares Temperaturniveau innerhalb des jeweiligen Behälters möglichst konstant zu halten.

Im Rahmen einer solchen Temperaturregelung kann ein Regler vorgesehen sein, der auf ein Stellglied, vorzugsweise in Form der wenigstens einen Pumpe oder in Form des wenigstens einen Kompressors, einwirkt, um die Fördermenge oder -geschwindigkeit innerhalb eines Kreislaufs zu beeinflussen und auf diesem Wege die an- oder abtransportierte Wärme zu steuern bzw. regeln. Bevorzugt wird für eine derartige Regelung ein Kreislauf zwischen dem betreffenden Behälter und einem Solarkollektor oder externen Wärmetauscher herangezogen.

Der errfindungsgemäße Wärmespeicher sollte eine Heizwendel aufweisen, die in seinem unteren Bereich angeordnet ist. Von dort steigt die erwärmte Speicherflüssigkeit innerhalb des Behälters nach oben, wo sie unmittelbar über einen anderen Anschluss oder die darin gespeicherte Wärme über einen Wärmetauscher entnommen werden kann.

Indem der Kältespeicher mit einer Kühlwendel versehen ist, die in seinem oberen Bereich angeordnet ist, sinkt von dort die abgekühlte Speicherflüssigkeit innerhalb des Behälters nach unten, und sammelt sich dort, also im unteren Bereich, an, wo eine Wärmeeinleitung durch sekundäre Wärmetauscher oder eine Abzapfung der kühlen Flüssigkeit möglich ist.

Die Erfindung empfiehlt, dass die Förderrichtung der wenigstens einen Pumpe oder des wenigstens einen Kompressors zu einem Wärmespeicher hin gerichtet ist. Wenn sich eine solche Fördereinrichtung stromaufwärts eines Wärmespeichers befindet, ein Entspannungsventil dagegen stromabwärts des Wärmespeichers, so wird dort die Temperatur angehoben, also eine Wärmeabgabe an die Speicherflüssigkeit des Wärmespeichers veranlasst.

Eine andere Konstruktionsvorschrift besagt, dass die Förderrichtung der wenigstens einen Pumpe oder des wenigstens einen Kompressors von einem Kältespeicher weg gerichtet ist. Wenn demnach eine solche Fördereinrichtung stromabwärts eines Kältespeichers, ein Entspannungsventil dagegen stromaufwärts des Kältespeichers angeordnet ist, so wird dort die Temperatur innerhalb der Kühlwendel des Kältespeichers abgesenkt, mithin eine Wärmeaufnahme von der Speicherflüssigkeit des Kältespeichers bewirkt.

Erfindungsgemäß kann weiterhin eine Wärmepumpe vorgesehen sein, deren Ein- und Ausgänge wahlweise mit einer Heizwendel in dem Wärmespeicher oder in dem Warmwasserbehälter koppelbar sind, und/oder mit einer Kühlwendel in dem Kältespeicher oder in dem Warmwassserbehälter, und/oder mit den Vor- und Rücklaufleitungen zu (von) dem (den) Solarkollektor(en).

Ferner kann auch ein Mischbetrieb vorgesehen sein, wobei ein Wärmetransport direkt von dem Kältespeicher zu dem Wärmespeicher stattfindet.

An dem Warmwasserbehälter können ein oder mehrere Heizkörper angeschlossen sein, insbesondere über eine in dem Wärmespeicher angeordnete Wärmetauscherspirale, durch die ein vorzugsweise flüssiges Wärmeübertragungsmedium zirkuliert, um die Wärme von dem Wärmespeicher auf einen oder mehrere Heizkörper zu verteilen.

Andererseits ist es auch möglich, dass an dem Wärmespeicher ein oder mehrere Warmwasserverbraucher angeschlossen sind, entweder direkt oder über eine in dem Wärmespeicher angeordnete Wärmetauscherspirale, durch die ein vorzugsweise flüssiges Wärmeübertragungsmedium zirkuliert, um die Wärme von dem Wärmespeicher auf einen oder mehrere Warmwasserverbraucher zu verteilen, beispielsweise auf eine Warmdusche, einen Heißwasser-Zapfhahn in der Küche, etc.

Ferner sind auch an dem Kältespeicher ein oder mehrere Heizkörper über eine in dem Kältespeicher angeordnete Wärmetauscherspirale angeschlossen, durch die ein vorzugsweise flüssiges Wärmeübertragungsmedium zirkuliert, um die von den Heizkörpern aufgenommene Wärme in den Kältespeicher zu transportieren. Damit kann auch selbst an warmen oder heißen Tagen ein angenehmes Raumklima aufrechterhalten werden.

Schließlich entspricht es der Lehre der Erfindung, dass an dem Kältespeicher ein oder mehrere Kaltwasserverbraucher angeschlossen sind, entweder direkt, um die gekühlte Speicherflüssigkeit in Form von kaltem Wasser zu einem Verbraucher, beispielsweise einer Kaltdusche, zu leiten, oder indirekt über eine in dem Kältespeicher angeordnete Wärmetauscherspirale, durch die ein vorzugsweise flüssiges Wärmeübertragungsmedium zirkuliert, um die Wärme von einem oder mehreren Kaltwasserverbrauchern, beispielsweise von einer Kaltdusche, zu dem Kältespeicher zu leiten.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erste Ausführungsform der Erfindung in einer schematischen Ansicht,
- Fig. 2: eine zweite Ausführungsform der Erfindung in einer der Fig. 1 entsprechenden Darstellung, sowie
- Fig. 3: eine dritte Ausführungsform der Erfindung in einer der Fig. 1 entsprechenden Darstellung.

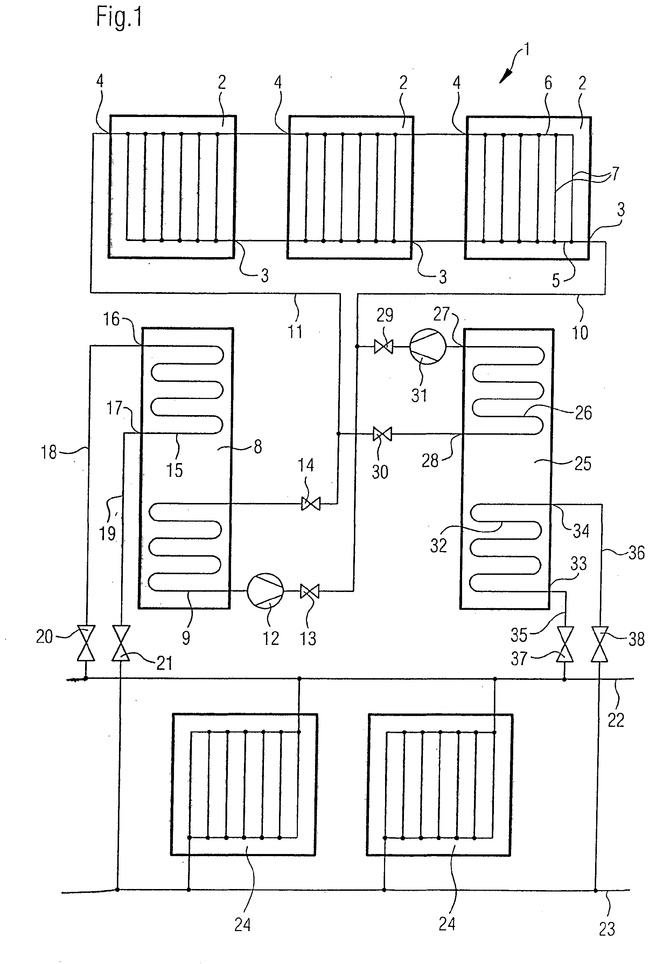

Das grundlegende Prinzip der Erfindung lässt sich an der beigefügten Fig. 1 ablesen, die einen Teil einer Hausinstallation, nämlich ein erfindungsgemäßes Temperatur-Management-System 1, schematisch wiedergibt.

Auf dem Dach des betreffenden Hauses befinden sich ein oder vorzugsweise mehrere Solarkollektoren 2, jeweils mit wenigstens einem Zulauf 3 und wenigstens einem Ablauf 4. Man erkennt ferner jeweils eine kollektorinterne Zulaufschiene 5 und eine kollektorinterne Ablaufschiene 6, welche durch jeweils mehrere, parallele Stegleitungen 7 miteinander verbunden sind. Mehrere Solarkollektoren 2 sind derart miteinander verbunden, dass ihre Zulaufschienen 5 einerseits untereinander verbunden sind, und ihre Ablaufschienen 6 andererseits, so dass sich insgesamt, d.h. über alle Solarkollektoren, eine gemeinsame Zulaufschiene und eine gemeinsame Ablaufschiene ergibt, wobei sämtliche Stegleitungen 7 parallel geschalten sind.

Wie dies bei Heißwasser-Solaranlagen im Allgemeinen üblich ist, werden die Stegleitungen 7 von unten noch oben durchströmt, weil das darin aufgeheizte Medium nach oben steigt.

Die Solarkollektoren 2 sollten gegenüber der Umgebung nicht thermisch isoliert sein. Sie können beispielsweise eine Metallplatte aufweisen, die geschwärzt sein kann, und mit der die Stegleitungen 7 in thermischem Kontakt stehen.

Wie bei einer Solarheizung üblich, sind die Solarkollektoren 2 mit einem Wärmespeicher 8 gekoppelt, der üblicherweise als Warmwasserbehälter ausgebildet ist. Vorzugsweise in dessen unterem Bereich befindet sich ein Wärmetauscher 9, vorzugsweise in Form einer Rohrwendel. Dieser Wärmetauscher 9 ist über je eine Vor- und Rücklaufleitung 10, 11 mit der Phalanx der Solarkollektoren 2 verbunden, so dass sich ein Kreislauf für ein Wärmeübertragungsmedium ergibt. Um das Wärmeübertragungsmedium im Fluß zu halten, ist eine Pumpe 12 oder ein Kompressor vorgesehen.

Das im Kreislauf zirkulierende Wärmeübertragungsmedium ist vorzugsweise flüssig, insbesondere Wassser. Dieses kann mit einem Frostschutzmittel versetzt sein, so dass sich sein zulässiger Temperaturbereich auch auf Außentemperaturen unter 0 °C erstreckt, und/oder es kann unter Druck stehen, so dass es selbst dann flüssig bleibt, wenn es sich - beispielsweise bei Ausfall einer Umwälzpumpe - auf Temperaturen oberhalb von 100 °C erhitzt.

Über Ventile 13, 14 kann der Kreislauf unterbrochen werden.

Der Wärmespeicher 8 ist vorzugsweise thermisch isoliert, beispielsweise mittels Vakuumisolationspaneelen, und kann mit einem Druckausgleich, beispielsweise einem Überdruckventil zur Atmosphäre, vesehen sein. Füllstandsmessung kann ebenso vorgesehen sein wie eine Temperaturmessung an einer oder mehreren Stellen im Wärmespeicher 8.

Im oberen Bereich des Wärmespeichers 8 befindet sich eine zweite Rohrwendel als zweiter Wärmetauscher 15. Dessen beide Anschlüsse 16, 17 sind über je eine Leitung 18, 19 und je eine Absperrvorrichtung 20, 21 mit je einer Verteilungsschiene 22, 23 verbunden, zwischen denen ein oder mehrere, vorzugsweise alle Heizkörper 24 des betreffenden Haushaltes angeschlossen sind. Über nicht dargestellte Thermostate kann der Durchfluß durch die Heizkörper 24 individuell gesteuert werden, entsprechend der jeweiligen Heiz-Anforderung.

Nicht dargestellt ist, dass von dem Wärmespeicher 8 aus auch Warmwasser erwärmt oder abgezweigt werden kann, bspw. für heißes Wasser in Küche und Bad.

Ferner kann der Wärmespeicher 8 mit einer Zusatzheizung versehen sein, beispielsweise in Form eines Gasbrenners, Ölbrenners od. dgl.

Die bisher geschilderten Anlagenkomponenten sind nur auf eine Beheizung der Räume in dem betreffenden Haushalt sowie ggf. zur Warmwassererzeugung geeignet. Eine Kühlung ist mit den bisher beschriebenen Komponenten ebensowenig vorgesehen wie ein Nachtbetrieb, da nachts keine Sonne scheint und also der Wärmespeicher 8 von den Solarkollektoren 2 nicht nachgeheizt werden kann. Wenn der Wärmespeicher 8 allerdings hinreichend groß ist, beispielsweise ein Fassungsvermögen von 1.000 Liter oder mehr aufweist, vorzugsweise ein Fassungsvermögen von 2.000 Liter oder mehr aufweist, insbesondere ein Fassungsvermögen von 4.000 Liter oder mehr aufweist, ferner thermisch optimal isoliert ist und tagsüber auf eine Temperatur von beispielsweise 50 °C oder mehr aufgeheizt wurde, vorzugsweise auf 60 °C oder mehr, so kann er seine Temperatur eventuell über Nacht halten bzw. den Heizungsbetrieb bis zum nächsten Morgen aufrechterhalten. Übliche Solarkollektoren 2 wären nachts inaktiv.

Jedoch umfasst die erfindungsgemäße Anlage zusätzlich einen Kältespeicher 25, ebenfalls bevorzugt in Form eines Wassertanks oder -behälters, wobei das darin enthaltene, als Wärmespeichermedium dienende Wasser vorzugsweise mit einem Frostschutzmittel versetzt ist, damit dieses ggf. auch bei Temperaturen unter 0 °C noch im flüssigen Aggregatszustand bleibt. Der Kältespeicher 25 kann im Wesentlichen den gleichen Aufbau haben wie der Wärmespeicher 8, also beispielsweise eine thermische Isolation, einen Druckausgleich oder Überlauf, eine Nachspeiseeinrichtung, Füllstandsmessung und ggf ein oder mehrere Sensoren zur Erfassung der Temperatur im Behälterinneren.

Im oberen Bereich des Kältespeichers 25 ist ein Wärmetauscher 26 in Form einer Rohrwendel od. dgl. angeordnet, dessen Anschlüsse 27, 28 über je ein Ventil 29, 30 oder eine sonstige Absperrvorrichtung mit der Vor- und Rücklaufleitung 10, 11 verbunden sind, so dass - nach Schließen der Ventile 13, 14 und Öffnen der Ventile 29, 30 der Kreislauf durch die Solarkollektoren 2 sich nicht mehr über den Wärmetauscher 9 im Wärmespeicher 8 schließt, sondern über den Wärmetauscher 26 im Kältespeicher 25. Das Wärmeübertragungsmedium kann darin dann durch eine weitere Pumpe 31 oder einen Kompressor in Bewegung gehalten werden.

Damit ist eine sogenannte Nachtbetriebsart möglich, die sich wie folgt gestaltet:
Während nachts die Ventile 13, 14 geschlossen sind und der Wärmespeicher 8 im reinen Speichermodus arbeitet, werden die Ventile 29, 30 geöffnet, so dass nun der Kältespeicher 25 mit den Solarkollektoren 2 kommuniziert. Die Solarkollektoren 2 sind nicht isoliert oder können sogar als Wärmetauscher ausgebildet sein, die bspw. mit der Umgebungsluft Wärme austauschen.

Wenn nachts die Außentemperatur abgesunken ist, biespielsweise auf 10 °C oder darunter, wird die Pumpe 31 eingeschaltet, und das Wärmeübertragungsmedium zirkuliert nun innerhalb des Kreislaufs 10, 11 zwischen dem Wärmetauscher 26 und den Solarkollektoren 2 hin und her. Dabei kühlt sich dieses medium - vorzugsweise Wasser - in den Solarkollektoren 2 oder externen Wärmetauschern entsprechend ab und entzeiht beim Zurückströmen und Eintritt in den Wärmetauscher 26 des Kältespeichers 25 letzterem Energie, die wiederum in den Solarkollektoren 2 oder externen Wärmetauschern abgegeben wird. Damit kann der Kältespeicher 25 herabgekühlt werden, jedenfalls bis auf die Außentemperatur in der Umgebung der Solarkollektoren 2. Wenn am Morgen die Außentemperatur wieder ansteigt, werden die Ventile 29, 30 wieder geschlossen, und der Kältespeicher 25 geht in den Speichermodus über, während nun wieder durch Öffnen der Ventile 13, 14 der Wärmespeicher 8 an die Solarkollektoren angeschlossen wird. Es empfiehlt sich, in einer bestimmten Übergangszeit die Pumpe 12, 31 noch nicht einzuschalten und stattdessen abzuwarten, bis die Temperatur des Wärmeübertragungsmediums innerhalb der Solarkollektoren 2 das Temperaturniveau in dem nun angeschlossenen Wärme- oder Kältespeicher 8, 25 erreicht hat. Es gibt also eigentlich vier Betriebsarten, nämlich zusätzlich zum Tag- und Nachtbetrieb noch eine Morgen- und Abendbetriebsart, wobei zwar bestimmte Ventile 13, 14, 29, 30 geöffnet sein können, aber noch keine Pumpe 12, 31 aktiviert ist, um eine Abkühlung des Wärmespeichers 8 bzw. eine Erwärmung des Kältespeichers 25 zu vermeiden.

Auch in dem Kältespeicher 25 gibt es einen zweiten Wärmetauscher 32, vorzugsweise ebenfalls in Form einer Rohrwendel, insbesondere im unteren Bereich des Kältespeichers 25. Wie der Wärmespeicher 8, so kann auch der Kältespeicher 25 die Gestalt eines aufrecht stehenden, etwa zylindrischen Gefäßes aufweisen. Die beide Anschlüsse 33, 34 des zweiten Wärmetauschers 32 in dem Kältespeicher 25 sind über je eine Leitung 35, 36 und je eine Absperrvorrichtung 37, 38 mit je einer der beiden Heizungs-Verteilungsschienen 22, 23 verbunden, zwischen denen ein oder mehrere, vorzugsweise alle Heizkörper 24 des betreffenden Haushaltes angeschlossen sind.

Über nicht dargestellte Thermostate kann der Durchfluß durch die Heizkörper 24 individuell gesteuert werden, entsprechend der jeweiligen Kühl-Anforderung. Da das Wärmeübetragungsmedium in dem Kreislauf 22, 23 33, 34, 35, 36 sich auf einem niedrigen Temperaturniveau befindet, beispielsweise bei 10 °C oder darunter, werden die Heizkörper nun nicht zum Beheizen der Räume verwendet, sondern zu deren Kühlung, d.h., sie nehmen Wärme auf und führen diese zum Kältespeicher 25 hin ab, dessen Temperatur dabei allmählich ansteigt.

Wenn der Kältespeicher 25 allerdings hinreichend groß ist, beispielsweise ein Fassungsvermögen von 1.000 Liter oder mehr aufweist, vorzugsweise ein Fassungsvermögen von 2.000 Liter oder mehr aufweist, insbesondere ein Fassungsvermögen von 4.000 Liter oder mehr aufweist, ferner thermisch optimal isoliert ist und nachts auf eine Temperatur von beispielsweise 10 °C oder weniger abgekühlt wurde, vorzugsweise auf 5 °C oder weniger, so kann er seine Temperatur eventuell tagsüber halten bzw. den Kühlungsbetrieb über den Tag und insbesondere über den Nachmittag hinweg aufrechterhalten.

Nicht dargestellt ist, dass von dem Kältespeicher 25 aus auch kaltes Wasser erzeugt abgezweigt werden kann, bspw. für kaltes Wasser in Küche und Bad.

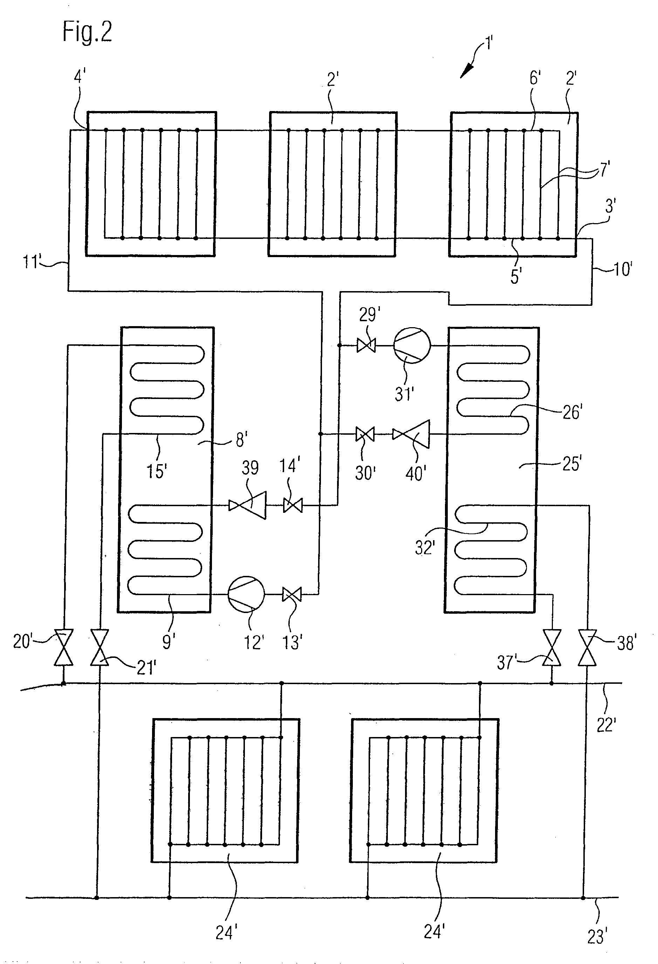

Die Ausführungsform 1' nach Fig. 2 hat gegenüber der Ausführungsform nach Fig. 1 einige wenige, aber funktionell besonders vorteilhafte Änderungen erfahren.

Die Änderungen beziehen sich dabei ausschließlich auf den Kreislauf über die Solarkollektoren 2'. Dabei wird innerhalb dieses Kreislaufs ein Wärmeübertragungsmedium verwendet, welches bei niedrigem Druck uner Wärmezufuhr verdampft und nach der Verdichtung auf einen höhreren Druck unter Wärmeabgabe wieder kondensiert. Damit ist ein Betrieb nach Art einer Wärmepumpe möglich.

Zu diesem Zweck werden anstelle von Pumpen 12, 31 nun Verdichter 12', 31' verwendet; jenseits des betreffenden Wärmetauschers 9', 26' wird zusätzlich eine Drossel bzw. ein Entspannungsventil 39, 40 verwendet.

Sind die Ventile 29', 30' geschlossen und die Ventile 13', 14' geöffnet, so wird das Wärmeübertragungsmedium von dem Verdichter 12' komprimiert und kondensiert in dem als Kondensator betriebenen Wärmetauscher 9' unter Wärmeabgabe. Das Medium erfährt in dem Ventil 39 eine Druckreduzierung, und das entspannte Medium verdampft schließlich in den solchenfalls als Verdampfer betriebenen Solarkollektoren 2' unter Wärmeaufnahme. Der Vorteil dieser Anordnung ist, dass der Wärmetransport tagsüber von draußen nach drinnen auch dann funktionert, wenn die Außentemperaturen vergleichsweise niedrig sind.

Ähnlich verhält es sich mit dem Nachtbetrieb, wobei dann die Ventile 13', 14' geschlossen und die Ventile 29', 30' geöffnet sind. Der Kompressor 31' ist umgekehrt eingebaut wie der Kompressor 12', d.h., er wirkt komprimierend auf das zu den Solarkollektoren 2' strömende Mredium ein, welches in den solchenfalls als Kondensator betriebenen Solarkollektoren 2'kondensiert und dabei Wärme abgibt. Das weiter strömende Medium erfährt schließlich in dem Ventil 40 eine Druckreduzierung, und das entspannte Medium verdampft sodann in dem als Verdampfer betriebenen Wärmetauscher 26' unter Wärmeaufnahme. Der Vorteil dieser Anordnung ist, dass der Wärmetransport nachts von innen nach außen auch dann funktionert, wenn die Außentemperaturen vergleichsweise hoch sind, also in einer lauen Sommernacht. Dabei ist es selbst bei Außentemperaturen von beispielsweise 15 °C oder darüber möglich, den Kältespeicher 25' auf 5 °C oder weniger abzukühlen; bei Verwendung von Frostschutzmittel sind sogar Temperaturen innerhalb des Kältespeichers 25' von unter 0 °C denkbar.

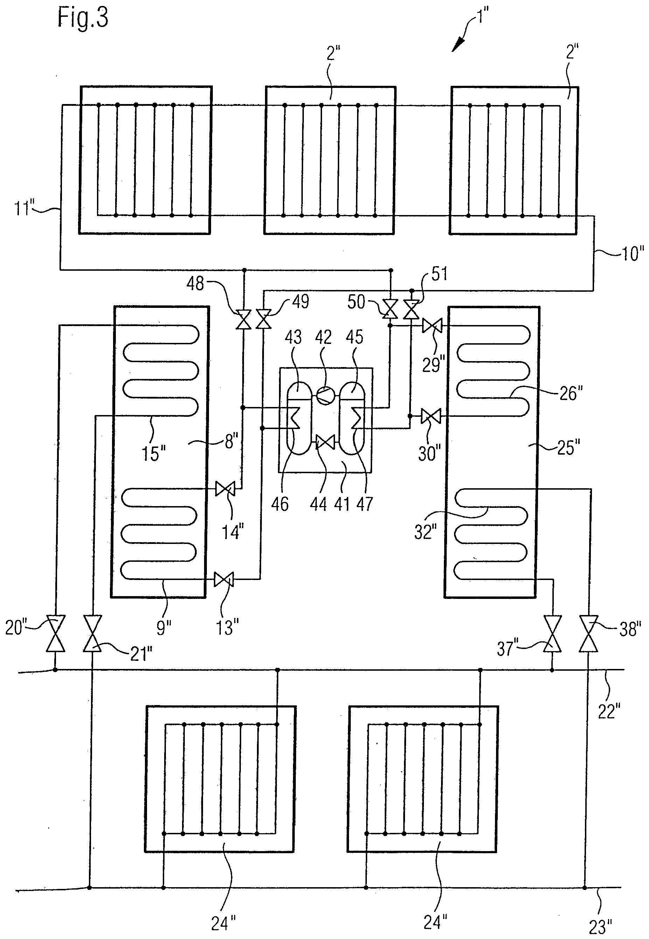

In Fig. 3 ist eine weiter verbesserte Ausführungsform eines erfindungsgemäßen Temperatur-Mangement-Systems 1" wiedergegeben, welches auf der Anordnung nach Fig. 2 aufbaut und also nach dem Wärmepumpen-Prinzip funktioniert. Hierbei ist jedoch insgesamt nur eine einzige Wärmepumpe 41 vorgesehen, mit einem Verdichter 42, einem Kondensationsbehälter 43, einem Entspannungventil 44 und einem Verdampfungsbehälter 45, welche in eben dieser Reihenfolge miteinander im Kreis verschalten sind.

In dem Kondensationsbehälter 43 gibt es einen Wärmetauscher 46, beispielsweise in Form einer Rohrwendel, der über Ventile 13", 14" mit dem Wärmetauscher 9" innerhalb des Wärmespeichers 8" koppelbar ist.

In ähnlicher Form verfügt der Verdampfungsbehälter 45 über einen Wärmetauscher 47, beispielsweise in Form einer Rohrwendel, der über Ventile 29", 30" mit dem Wärmetauscher 26" innerhalb des Wärmespeichers 25" koppelbar ist.

Die Vor- und Rücklaufleitungen 10, 11 von den Solarkollektoren 2" sind wahlweise über die Ventile 48, 49 mit dem Wärmetauscher 46 in dem Kondensationsbehälter 43 oder über die Ventile 50, 51 mit dem Wärmetauscher 47 in dem Verdampfungsbehälter 45 verbindbar.

Je nach Steuerung der Ventile 13", 14", 29", 30", 48, 49, 50, 51 sind dabei verschieden Betreiebsarten möglich:
Bei der üblichen Tagbetriebsart sind die Ventile 13", 14" sowie 50 und 51 geöffnet, die anderen Ventile geschlossen - der Wärmespeicher 8" wird über die Solarkollektoren 2" aufgeladen. Der Verdichter 41 und/oder weitere Umwälzpumpen sind im reinen Tagbetrieb eingeschalten, in dem vorbereitenden Morgenbetrieb sind diese noch aus.

Bei der oben beschriebenen Nachtbetriebsart sind die Ventile 29", 30" sowie 48 und 49 geöffnet, die anderen Ventile geschlossen - der Kältespeicher 25" wird über die Solarkollektoren 2" oder externen Wärmetauscher abgekühlt. Der Verdichter 41 und/oder weitere Umwälzpumpen sind im reinen Nachtbetrieb eingeschalten, in dem vorbereitenden Abendbetrieb sind diese noch aus.

Daneben lässt dieses Temperatur-Management-System 1" noch eine weitere, sozusagen fünfte Betriebsart zu. Diese zeichnet sich dadurch aus, dass die Ventile 13", 14" sowie 29" und 30" geöffnet sind, während die anderen Ventile 48 bis 51 geschlossen sind. Nun sind die beiden Speicher, also der Wärmespeicher 8" und der Kältespeicher 25", über die Wärmepumpe 41 direkt miteinander gekoppelt, d.h., der Wärmespeicher 8" wird erwärmt und gelichueitig wird der Kältespeicher 25" gekühlt.

Diese Misch-Betriebsart ist häufig dann empfehlenswert, wenn ein Speicher noch nicht vollständig aufgeladen und gleichzeitig der andere bereits teilweise entladen ist. Dies tritt häufig dann auf, wenn sich die Wetterlage ändert, also beispielsweise dann, wenn auf einen kalten Tag eine milde Nacht folgt, so dass sich wegen der laufenden Heizung der Wärmespeicher nicht ausreichend aufladen konnte, und gleichzeitig abends der Kältespeicher nicht schnell genug abgekühlt wird.

Der Vorteil einer solchen Misch-Betriebsart ist, dass kein Wärmeaustausch mit der Atmosphäre stattfindet und stattdessen die gesamte Leistung der Wärmepumpe vollständig genutzt werden kann.

**Bezugszeichenliste**

| | | | |
|---|---|---|---|
| 1 | Temp.-Management-System | 27 | Anschluß |
| 2 | Solarkollektor | 28 | Anschluß |
| 3 | Zulauf | 29 | Ventil |
| 4 | Ablauf | 30 | Ventil |
| 5 | Zulaufschiene | 31 | Pumpe, Verdichter |
| 6 | Ablaufschiene | 32 | Wärmetauscher |
| 7 | Stegleitung | 33 | Anschluß |
| 8 | Wärmespeicher | 34 | Anschluß |
| 9 | Wärmetauscher | 35 | Leitung |
| 10 | Vorlauf | 36 | Leitung |
| 11 | Rücklauf | 37 | Absperrvorrichtung |
| 12 | Pumpe, Verdichter | 38 | Absperrvorrichtung |
| 13 | Ventil | 39 | Entspannungsventil |
| 14 | Ventil | 40 | Entspannungsventil |
| 15 | Wärmetauscher | 41 | Wärmepumpe |
| 16 | Anschluß | 42 | Verdichter |
| 17 | Anschluß | 43 | Kondensationsbehälter |
| 18 | Leitung | 44 | Entspannungsventil |
| 19 | Leitung | 45 | Verdampfungsbehälter |
| 20 | Absperrvorrichtung | 46 | Wärmetauscher |
| 21 | Absperrvorrichtung | 47 | Wärmetauscher |
| 22 | Verteilungsschiene | 48 | Ventil |
| 23 | Verteilungsschiene | 49 | Ventil |
| 24 | Heizkörper | 50 | Ventil |
| 25 | Kältespeicher | 51 | Ventil |
| 26 | Wärmetauscher | | |

## Patentansprüche

1. Temperatur-Management-System (1;1';1") für einen privaten Haushalt oder ein öffentliches Gebäude, umfassend einen vorzugsweise als Warmwasserbehälter ausgebildeten Wärmespeicher (8;8';8") mit einer Heizwendel (9;9';9") sowie einen vorzugsweise als Kaltwasserbehälter ausgebildeten Kältespeicher (25;25';25") mit einer Kühlwendel (26;26';26"), welche zum Zweck des Aufheizens oder Abkühlens des jeweiligen Speichers (8,25) über eine Vorlaufleitung (10;10';10") und über eine Rücklaufleitung (11;11';11 ") mit wenigstens einem im Freien angeordneten Solarkollektor (2) oder Wärmetauscher gekoppelt sind, so dass sich ein Kreislauf für ein Wärmeübertragungsmedium ergibt, wobei in dem Kreislauf Ventile (13,14;29,30;13',14';29',30';13",14";29",30") angeordnet sind, nach deren Stellung sich der Kreislauf des wenigstens einen Solarkollektors (2) oder Wärmetauschers für das Wärmeübertragungsmedium wahlweise unterschiedlich schließt, nämlich bei Auswahl des Tagbetriebs schließt sich der Kreislauf von dem wenigstens einen Solarkollektor (2) oder Wärmetauscher über die Vorlaufleitung (10;10';10") und über die Rücklaufleitung (11;11';11") zu der Heizwendel (9;9';9") im Wärmespeicher (8;8';8"), so dass ein Wärmetransport von dem wenigstens einen Solarkollektor (2) oder Wärmetauscher zu dem Wärmespeicher (8;8';8") hin stattfindet, und bei Auswahl des Nachtbetriebs schließt sich der Kreislauf von dem wenigstens einen Solarkollektor (2) oder Wärmetauscher über die Vorlaufleitung (10;10';10") und über die Rücklaufleitung (11;11';11") zu der Kühlwendel (26:26';26") im Kältespeicher (25;25';25"), so dass ein Wärmetransport von dem Kältespeicher (25;25';25") zu dem wenigstens einen Solarkollektor (2) oder Wärmetauscher hin stattfindet, **dadurch gekennzeichnet, dass**
a) die Kühlwendel (26;26';26") im oberen Bereich des Kältespeichers (25;25';25") angeordnet ist, und dass
b) im unteren Bereich des Kältespeichers (25;25';25") ein Wärmetauscher (32;32';32") angeordnet ist, an welchem ein oder mehrere Heizkörper (24;24';24") derart angeschlossen sind, dass zwischen diesen und dem Wärmetauscher (32;32';32") in dem unteren Bereich des Kältespeichers (25;25';25") ein Wärmeübertragungsmedium zirkulieren kann.

2. Temperatur-Management-System (1;1';1") nach Anspruch 1, **dadurch gekennzeichnet, dass** der Kaltwasserbehälter unterirdisch angeordnet ist, insbesondere als Zisterne.

3. Temperatur-Management-System (1;1';1") nach einem der vorhergehenden Ansprüche, **dadurch gekennzeichnet, dass**
a) der wenigstens eine im Freien angeordnete Solarkollektor (2) oder Wärmetauscher ohne jegliche Isolation ausgebildet ist; und/oder dass
b) die Leitungen (10,11;10',11';10",11") zwischen dem wenigstens einen im Freien angeordneten Solarkollektor (2) oder Wärmetauscher einerseits und dem Wärmespeicher (8;8';8") und/oder dem Kältespeicher (25;25';25") andererseits thermisch isoliert sind.

4. Temperatur-Management-System (1;1';1") nach einem der vorhergehenden Ansprüche, **dadurch gekennzeichnet, dass** in dem Kreislauf der Leitungen (10,11;10',11';10",11") zwischen dem wenigstens einen im Freien angeordneten Solarkollektor (2) oder Wärmetauscher einerseits und dem Wärmespeicher (8;8';8") und/oder dem Kältespeicher (25;25';25") andererseits eine Pumpe (12,31;12',31';12",31") angeordnet ist und ein flüssiges Wärmeübertragungsmedium, insbesondere Wasser, zirkuliert.

5. Temperatur-Management-System (1;1';1") nach einem der Ansprüche 1 bis 3, **gekennzeichnet durch** einen Kreislauf für ein Wärmeübertragungsmedium, in welchem wenigstens ein Kompressor angeordnet ist, und wenigstens ein Entspannungsventil (39,40).

6. Temperatur-Management-System (1;1';1") nach Anspruch 5, **dadurch gekennzeichnet, dass** der wenigstens eine im Freien angeordnete Solarkollektor (2) oder Wärmetauscher druckfest ausgebildet ist, beispielsweise für einen Überdruck bis 5 atm oder darüber, vorzugsweise für einen Überdruck bis 10 atm oder darüber, insbesondere für einen Überdruck bis 20 atm oder darüber.

7. Temperatur-Management-System (1;1';1") nach einem der Ansprüche 4 bis 6 **dadurch gekennzeichnet, dass** die Förderrichtung der wenigstens einen Pumpe (12,31;12',31';12",31") oder des wenigstens einen Kompressors
a) zu einem Wärmespeicher (8;8';8") hin gerichtet ist, oder
b) von einem Kältespeicher (25;25';25") weg gerichtet ist.

8. Temperatur-Management-System (1;1';1") nach einem der vorhergehenden Ansprüche, **dadurch gekennzeichnet, dass** der Wärmespeicher (8;8';8") und/oder der Kältespeicher (25;25';25") zu einem möglichst geringen Wärmeaustausch mit der Umgebung ausgebildet ist/sind, insbesondere mit einer intensiven thermischen Isolation ausgestattet ist/sind.

9. Temperatur-Management-System (1;1';1") nach einem der vorhergehenden Ansprüche, **dadurch gekennzeichnet, dass** der Wärmespeicher (8;8';8") und/oder der Kältespeicher (25;25';25") mit einer Nachspeiseeinrichtung und/oder einer Füllstandsregelung ausgerüstet ist/sind, und/oder mit einem Druckausgleichsventil.

10. Temperatur-Management-System (1;1';1") nach einem der vorhergehenden Ansprüche, **dadurch gekennzeichnet, dass** der Wärmespeicher (8;8';8") und/oder der Kältespeicher (25;25';25") mit einer Temperaturregelung ausgerüstet ist/sind.

11. Temperatur-Management-System (1;11") nach einem der vorhergehenden Ansprüche, **dadurch gekennzeichnet, dass** die Heizwendel (9;9';9") des Wärmespeichers (8;8';8") in dessen unterem Bereich angeordnet ist.

12. Temperatur-Management-System (1;1';1") nach einem der vorhergehenden Ansprüche, **dadurch gekennzeichnet, dass** eine Wärmepumpe (41) vorgesehen sind, deren Ein- und Ausgänge wahlweise mit der Heizwendel (9") in dem Wärmespeicher (8") koppelbar sind, und/oder mit der Kühlwendel (26") in dem Kältespeicher (25"), und/oder mit den Vor- und Rücklaufleitungen (10",11") zu (von) dem (den) Solarkollektor(en) (2;2';2").

13. Temperatur-Management-System (1;1';1") nach einem der vorhergehenden Ansprüche, **dadurch gekennzeichnet, dass** ein (Misch-) Betrieb vorgesehen ist, wobei ein Wärmetransport direkt von dem Kältespeicher (25;25';25") zu dem Wärmespeicher (8;8';8") stattfindet.

14. Temperatur-Management-System (1;1';1") nach einem der vorhergehenden Ansprüche, **dadurch gekennzeichnet, dass** an dem Wärmespeicher (8;8';8") ein oder mehrere Heizkörper (24;24';24") und/oder ein oder mehrere Warmwasserverbraucher angeschlossen sind, insbesondere über die in dem Wärmespeicher (8;8';8") angeordnete Wärmetauscherspirale (15;15';15"), durch die ein vorzugsweise flüssiges Wärmeübertragungsmedium zirkuliert, um die Wärme von dem Wärmespeicher (8;8';8") auf einen oder mehrere Heizkörper (24;24';24") und/oder auf einen oder mehrere Warmwasserverbraucher zu verteilen.

15. Temperatur-Management-System (1;1';1") nach einem der Ansprüche 4 bis 7 in Verbindung mit Anspruch 10, **dadurch gekennzeichnet, dass** die Temperaturregelung auf die wenigstens eine Pumpe (12,31) oder auf den wenigstens einen Kompressor als Stellglied einwirkt.

## Claims

1. Temperature Management System (1;1';1") for a private household or public building, comprising a hot reservoir (8;8';8") preferably designed as a hot water container and provided with a heating coil (9;9';9"), and a cold reservoir (25;25';25") preferably designed as a cold water container and provided with a cooling coil (26;26'26"), which are or can be coupled via a supply line (10;10';10") and via a return line (11;11';11") with at least one solar collector (2) or heat exchanger installed outdoors for the purpose of heating or cooling the respective reservoir (8,25) in order to form a circuit for a heat transfer medium, wherein valves (13,14;29,30;13',14';29',30';13",14";29",30") are arranged in said circuit, according to whose position the circuit of the at least one solar collector (2) or heat exchanger for the heat transfer medium is closed in different ways, namely upon selecting a daytime operation, the circuit is closed from the at least one solar collector (2) or heat exchanger via the supply line (10;10';10") and via the return line (11;11';11") to the heating coil (9;9';9") in the hot reservoir (8;8';8"), so that there is a transport of heat from the at least one solar collector (2;2';2") or heat exchanger to the hot reservoir (8;8';8"), and upon selecting a nighttime operation, the circuit is closed from the at least one solar collector (2) or heat exchanger via the supply line (10;10';10") and via the return line (11;11';11") to the cooling coil (26;26';26") in the cold reservoir (25;25';25"), so that there is a transport of heat from the the cold reservoir (25;25';25") to the at least one solar collector (2;2';2") or heat exchanger, **characterized in that**
a) the cooling coil (26;26';26") is installed in the upper area of the cold reservoir (25;25';25"), and **in that**
b) a heat exchanger (32;32';32") is installed in the lower area of the cold reservoir (25;25';25"), wherein one or more radiators (24;24';24") are connected to the heat exchanger (32;32';32") in such a way that a heat transfer medium can flow between the radiators (24;24';24") and the heat exchanger (32;32';32") in the lower area of the cold reservoir (25;25';25").

2. Temperature Management System (1;1';1") according to claim 1, **characterized in that** the cold water container is installed underground, in particular as a cistern.

3. Termperature Management System (1;1';1") according to one of the preceding claims, **characterized in that**
a) the at least one solar collector (2;2';2") or heat exchanger installed outdoors is designed without any insulation, and/or **in that**
b) the pipes (10,11;10',11';10",11") between the at least one solar collector (2) or heat exchanger installed outdoors on the one hand and the hot reservoir (8;8';8") and/or the cold reservoir (25;25';25") on the other hand are thermally insulated.

4. Temperature Management System (1;1';1") according to one of the preceding claims, **characterized in that** the pipes (10,11;10',11';10",11") between the at least one solar collector (2;2';2") or heat exchanger installed outdoors on the one hand and the hot reservoir (8;8';8") and/or the cold reservoir (25;25';25") on the other hand form a circuit in which a pump (12,31;12',31';12",31") is installed and a liquid heat transfer medium, especially water circulates.

5. Temperature Management System (1;1';1") according to one of the preceding claims, **characterized by** at least one circuit for a heat transfer medium, in which a compressor is installed, and at least one expansion valve (39,40).

6. Temperature Management System (1;1';1") according to claim 5, **characterized in that** the at least one solar collector (2;2';2") and/or heat exchanger installed outdorrs is designed to be compression-proof, for example for a pressure burden of up to 5 atm or more, preferably for a pressure burden of up to 10 atm or more, especially for a pressure burden of up to 20 atm or more.

7. Temperature Management System (1;1';1") according to one of claims 4 to 6, **characterized in that** the conveying direction of the at least one pump (12,31;12',31';12",31") or of the at least one compressor is directed
a) towards a hot reservir (8;8';8"), or
b) fromwards a cold reservoir (25;25';25").

8. Temperature Management System (1;1';1") according to one of the preceding claims, **characterized in that** the hot reservoir (8;8';8") and/or the cold reservoir (25;25';25") is/are designed for minimum heat exchange with the environment,especially is/are equipped with an intense thermal insulation.

9. Temperature Management System (1;1';1") according to one of the preceding claims, **characterized in that** the hot reservoir (8;8';8") and/or the cold reservoir (25;25';25") is/are equipped with a refilling device, and/or with a filling level regulator, and/or with a pressure compensating valve.

10. Temperature Management System (1;1';1") according to one of the preceding claims, **characterized in that** the hot reservoir (8;8';8") and/or the cold reservoir (25;25';25") is/are equpped with a temperature regulator.

11. Temperature Management System (1;1';1") according to one of the preceding claims, **characterized in that** the heating coil (9;9';9") of the hot reservoir (8;8';8") is installed in the lower area thereof.

12. Temperature Management System (1;1';1") according to one of the preceding claims, **characterized in that** a heat pump (41) is provided, the inputs and outputs of which can be coupled with the heating coil (9") in the hot reservoir (8"), and/or with the cooling coil (26") in the cold reservoir (25"), and/or with the supply pipe (10") to and return pipe (11") from the solar collector(s) (2;2';2").

13. Temperature Management System (1;1';1") according to one of the preceding claims, **characterized by** a (mixed) operation in which there is a transport of heat directly from the cold reservoir (25;25';25") to the hot reservoir (8;8';8").

14. Temperature Management System (1;1';1") according to one of the preceding claims, **characterized in that** one or more radiators (24;24';24") and/or one or more hot water consumers are connected to the hot reservoir (8;8';8"), in particular via the coil heat exchanger (15;15';15") that is installed in the hot reservoir (8;8';8"), through which a heat transfer medium, preferably a liquid heat transfer medium, circulates in order to distribute the heat from the hot reservoir (8;8';8") to one or more radiators (24;24';24") and/or to one or more hot water consumers.

15. Temperature Management System (1;1';1") according to one of claims 4 to 7 taken in conjunction with claim 10, **characterized in that** the temperature regulator acts upon the at least one pump (12,31) or upon the at least one compressor as an actuator.

## Revendications

1. Système de gestion de la température (1 ; 1' ; 1") pour un lieu de résidence privé ou pour un bâtiment public, comprenant un accumulateur de chaleur (8 ; 8' ; 8") conçu de préférence comme réservoir d'eau chaude avec un serpentin de chauffe (9 ; 9'; 9") ainsi qu'un accumulateur de froid (25 ; 25' ; 25") conçu comme réservoir d'eau froide avec un serpentin de refroidissement (26 ; 26' ; 26"), lesquels sont couplés à des fins de chauffage ou de refroidissement de l'accumulateur (8, 25) associé via une conduite aller (10 ; 10' ; 10") et une conduite retour (11 ; 11' ; 11") avec au moins un collecteur solaire (2) ou échangeur de chaleur disposé en plein air afin d'obtenir un circuit pour un agent caloporteur, en ce que des vannes (13, 14; 29, 30; 13', 14' ; 29', 30' ; 13", 14" ; 29", 30") sont disposées dans le circuit, selon la position desquelles le circuit d'au moins un collecteur solaire (2) ou un échangeur de chaleur pour l'agent caloporteur se ferme le cas échéant différemment, à savoir en cas de sélection du mode diurne, le circuit se ferme depuis au moins ledit collecteur solaire (2) ou échangeur de chaleur via la conduite aller (10 ; 10' ; 10") et via la conduite retour (11 ; 11' ; 11") vers le serpentin de chauffe (9 ; 9' ; 9") dans l'accumulateur de chaleur (8 ; 8' ; 8"), de sorte qu'un transport de chaleur a lieu depuis soit ledit collecteur solaire (2) ou échangeur de chaleur vers l'accumulateur de chaleur (8 ; 8' ; 8"), et en cas de sélection du mode nocturne, lé circuit se ferme depuis soit ledit collecteur solaire (2) ou échangeur de chaleur via la conduite aller (10 ; 10' ; 10") et via la conduite retour (11 ; 11' ; 11") vers le serpentin de refroidissement (26 ; 26' ; 26") dans l'accumulateur de froid (25 ; 25' ; 25"), de sorte qu'un transport de chaleur a lieu depuis l'accumulateur de froid (25 ; 25' ; 25") soit vers ledit collecteur solaire (2) ou échangeur de chaleur, **caractérisé en ce que**
a) le serpentin de refroidissement (26 ; 26' ; 26") est disposé dans la zone supérieure de l'accumulateur de froid (25 ; 25' ; 25"), et **en ce que**
b) dans la zone inférieure de l'accumulateur de froid (25; 25' ; 25") est disposé un échangeur de chaleur (32 ; 32' ; 32") auquel sont raccordés un ou plusieurs radiateurs (24 ; 24' ,24") de façon à ce qu'un agent caloporteur puisse circuler entre ces derniers et l'échangeur de chaleur (32; 32' ; 32") dans la zone inférieure de l'accumulateur de froid (25 ; 25' ; 25") .

2. Système de gestion de la température (1 ; 1' ; 1") selon la revendication 1, **caractérisé en ce que** le réservoir d'eau froide est enterré, en particulier sous forme de citerne.

3. Système de gestion de la température (1 ; 1' ; 1") selon l'une des revendications précédentes, **caractérisé en ce que**
a) soit ledit collecteur solaire (2) ou échangeur de chaleur disposé en plein air est conçu sans aucune isolation ; et/ou **en ce que**
b) les conduites (10, 11; 10', 11'; 10", 11") entre soit ledit collecteur solaire (2) disposé en plein air ou échangeur de chaleur d'une part et entre l'accumulateur de chaleur (8 ; 8' ; 8") et/ou l'accumulateur de froid (25 ; 25' ; 25") d'autre part sont isolées thermiquement.

4. Système de gestion de la température (1 ; 1' ; 1") selon l'une des revendications précédentes, **caractérisé en ce que** dans le circuit des conduites (10, 11 ; 10', 11' ; 10", 11") entre soit ledit collecteur solaire (2) disposé en plein air ou échangeur de chaleur d'une part et entre l'accumulateur de chaleur (8 ; 8' ; 8") et/ou l'accumulateur de froid (25 ; 25' ; 25") d'autre part est disposée une pompe (12, 31 ; 12', 31' ; 12", 31") et un agent caloporteur liquide, en particulier de l'eau, circule.

5. Système de gestion de la température (1 ; 1' ; 1") selon l'une des revendications 1 à 3, **caractérisé par** un circuit pour un agent caloporteur, dans lequel au moins un compresseur est disposé, et au moins une soupape de détente (39, 40).

6. Système de gestion de la température (1 ; 1' ; 1") selon la revendication 5, **caractérisé en ce que** soit ledit collecteur solaire (2) disposé en plein air ou échangeur de chaleur est résistant à la pression, par exemple résistant à une surpression de jusqu'à 5 atm ou plus, de préférence résistant à une surpression de jusqu'à 10 atm ou plus, en particulier résistant à une surpression de jusqu'à 20 atm ou plus.

7. Système de gestion de la température (1 ; 1' ; 1") selon l'une des revendications 4 à 6, **caractérisé en ce que** le sens de refoulement d'au moins une pompe (12, 31; 12', 31' ; 12", 31") ou d'au moins un compresseur
a) est orienté vers un accumulateur de chaleur (8 ; 8' ; 8"), ou
b) est éloigné d'un accumulateur de froid (25 ; 25' ; 25").

8. Système de gestion de la température (1 ; 1' ; 1") selon l'une des revendications précédentes, **caractérisé en ce que** l'accumulateur de chaleur (8 ; 8' ; 8") et/ou l'accumulateur de froid (25 ; 25' ; 25") est/sont conçu(s) pour un échange de chaleur avec l'environnement le plus faible possible, en particulier est/sont doté(s) d'une isolation thermique intense.

9. Système de gestion de la température (1 ; 1' ; 1") selon l'une des revendications précédentes, **caractérisé en ce que** l'accumulateur de chaleur (8 ; 8' ; 8") et/ou l'accumulateur de froid (25 ; 25' ; 25") est/sont équipé(s) d'un dispositif d'alimentation secondaire et/ou d'une régulation du niveau de remplissage, et/ou d'une soupape compensatrice de pression.

10. Système de gestion de la température (1 ; 1' ; 1") selon l'une des revendications précédentes, **caractérisé en ce que** l'accumulateur de chaleur (8 ; 8' ; 8") et/ou l'accumulateur d'e froid (25 ; 25' ; 25") est/sont équipé(s) d'une régulation de la température.

11. Système de gestion de la température (1 ; 1' ; 1") selon l'une des revendications précédentes, **caractérisé en ce que** le serpentin de chauffe (9 ; 9' ; 9") de l'accumulateur de chaleur (8 ; 8' ; 8") est disposé dans sa zone inférieure.

12. Système de gestion de la température (1 ; 1' ; 1") selon l'une des revendications précédentes, **caractérisé en ce qu'**une pompe à chaleur (41) est prévue, dont les entrées et sorties peuvent sélectivement être couplées au serpentin de chauffe (9") dans l'accumulateur de chaleur (8"), et/ou au serpentin de refroidissement (26") dans l'accumulateur de froid (25"), et ou aux conduites aller et retour (10", 11") vers (depuis) le collecteur solaire (les collecteurs solaires) (2 ; 2' ; 2").

13. Système de gestion de la température (1 ; 1' ; 1") selon l'une des revendications précédentes, **caractérisé en ce qu'**un mode (mixte) est prévu, **en ce qu'**un transport de chaleur a lieu directement de l'accumulateur de froid (25 ; 25' ; 25") vers l'accumulateur de chaleur (8 ; 8' ; 8").

14. Système de gestion de la température (1 ; 1' ; 1") selon l'une des revendications précédentes, **caractérisé en ce qu'**un ou plusieurs radiateurs (24 ; 24' ; 24") et/ou un ou plusieurs consommateurs d'eau chaude sont raccordés à l'accumulateur de chaleur (8 ; 8' ; 8"), en particulier via la spirale d'échangeur de chaleur (15 ; 15' ; 15") disposée dans l'accumulateur de chaleur (8 ; 8' ; 8"), par laquelle spirale circule un agent caloporteur de préférence liquide afin de répartir la chaleur de l'accumulateur de chaleur (8 ; 8' ; 8") sur un ou plusieurs radiateurs (24 ; 24' ; 24") et/ou sur un ou plusieurs consommateurs d'eau chaude.

15. Système de gestion de la température (1 ; 1' ; 1") selon l'une des revendications 4 en association avec la revendication 10, **caractérisé en ce que** la régulation de la température agit au moins soit sur une pompe (12, 31) ou au moins sur un compresseur en tant qu'élément de réglage.
